# EUROPÄISCHE PATENTSCHRIFT

(11) **EP 2 670 580 B1**
(45) Veröffentlichungstag und Bekanntmachung des Hinweises auf die Patenterteilung: **27.03.2019**
(21) Anmeldenummer: 12700643.5
(22) Anmeldetag: 11.01.2012
(51) Int. Cl.: B29C 65/16, F16B 17/00, F16K 27/02, F16K 31/06, B23K 26/24, B23K 26/28, B23K 33/00

(54) **ELEKTROMAGNETVENTIL SOWIE VERFAHREN ZUM VERBINDEN MITTELS LASERSTRAHLEN VON WERKSTÜCKTEILEN EINES ELEKTROMAGNETVENTILS**
SOLENOID VALVE AND METHOD FOR CONNECTING COMPONENTS OF A SOLENOID VALVE BY MEANS OF LASER BEAMS
ÉLECTROVANNE ET PROCÉDÉ PERMETTANT D'ASSEMBLER PAR RAYONNEMENT LASER DES COMPOSANTS D'ÉLECTROVANNE

(30) Priorität: 02.02.2011 DE 102011010181
(43) Veröffentlichungstag der Anmeldung: 11.12.2013
(73) Patentinhaber: Pierburg GmbH, 41460 Neuss (DE)
(72) Erfinder: SCHNELKER, Franz-Josef, 41470 Neuss (DE); BUSE, Werner, 41564 Kaarst (DE); DOHRMANN, Rolf, 41564 Kaarst (DE); FERNANDES, Alvito, 51377 Leverkusen (DE)
(74) Vertreter: ter Smitten, Hans
(86) Internationale Anmeldenummer: PCT/EP2012/050363
(87) Internationale Veröffentlichungsnummer: WO 2012/104117

(56) Entgegenhaltungen:
- DE-A1-102005 042 722
- DE-A1-102008 017 922
- DE-A1-102008 020 042
- DE-A1-102008 040 545
- US-A1- 2010 096 388

## Beschreibung

Die Erfindung betrifft ein Elektromagnetventil mit einem Gehäuse, in dem eine auf einen Spulenträger gewickelte Spule, ein Ankerteil, ein Kern und eine Rückschlussanordnung angeordnet sind, die einen elektromagnetischen Kreis bilden, wobei das bewegliche Ankerteil über Lagermittel in dem Spulenträger gelagert ist und auf ein, in einer Ventilhülse vorgesehenes Ventilverschlussglied einwirkt, wobei der Spulenträger ein erstes Werkstückteil ausbildet, das durch eine Fügezone mit der Ventilhülse verbindbar ist. Des Weiteren betrifft die Erfindung ein Verfahren zum Verbinden mittels Laserstrahlen von Werkstückteilen eines derartigen Elektromagnetventils.

Elektromagnetventile sind aus dem Stand der Technik hinlänglich bekannt. So beschreibt die DE 10 2008 020 042 A1 ein bekanntes Elektromagnetventil mit einer Fügezone zwischen der Ventilhülse und einem Ansatzstück des Spulenträgers, wobei die Teile miteinander verklebt und durch einen Bördelring gesichert werden. Es sollte deutlich sein, dass diese Art der Verbindung kosten- und zeitaufwendig ist. Stoffschlüssige Fügeverfahren, die einen Wärmeintrag bedingen, konnten aus verschiedensten Gründen nicht angewendet werde. So ist die Qualität des magnetischen Kreises durch einen zu hohen Wärmeeintrag gefährdet. Auch ist die Gefahr eines koaxialen Versatzes zwischen Ventilhülse und Spulenträger gegeben.

Ein Verfahren zum Verbinden von Werkstückteilen mittels Laserstrahlen ist in der EP 0 751 865 B2 offenbart. Zur Verbesserung der Güte der Verschweißung wird in dieser Druckschrift vorgeschlagen, dass während oder nach der Erwärmung und dem Aufschmelzen der Fügezone durch die Laserstrahlen eine Druckeinwirkung im Bereich der Fügezone vorgenommen wird. Diese Druckeinwirkung wird dabei insbesondere durch hydraulische, pneumatische oder rollenartige Niederhalter, die gegebenenfalls für die Laserstrahlen transparent sein können, vorgenommen. Es sollte deutlich sein, dass eine Vorrichtung zum Durchführen des Schweißverfahrens mit derartigen Niederhaltern einen hohen fertigungstechnischen Aufwand beinhaltet. Dementsprechend ist ein derartiges Verfahren auch teuer in der Durchführung. Aus der DE 10 2008 017 922 A1 ist desweiteren eine Laserschweißverbindung von Kunststoffrohren und anderen Kunststoffteilen bekannt, wobei eine umlaufende Auswölbung vorgesehen ist, um einen Anpressdruck zur Erhöhung des Wärmekontaktes zu erzeugen.

Es ist daher Aufgabe der Erfindung, ein Elektromagnetventil sowie ein Verfahren bereitzustellen, das die oben aufgezeigten Nachteile vermeidet.

Diese Aufgabe wird dabei durch ein Elektromagnetventil gelöst, wobei das erste Werkstückteil des Spulenträgers als Laserstrahl-transparentes Werkstückteil aus Kunststoff und die Ventilhülse als zweites Laserstrahl-absorbierendes Werkstückteil aus Metall ausgeführt ist, wobei die Ventilhülse im Bereich der Fügezone mindestens ein Rippenelement aufweist. Auf diese Weise entsteht automatisch beim Zusammenfügen der beiden Werkstückteile eine Druckwirkung durch Aufbau der inneren Spannungen in den beiden Teilen. Das Aufbringen einer externen Druckeinwirkung durch vorzusehende hydraulische, pneumatische oder rollenhaltige Niederhalter ist nicht mehr notwendig.

Eine besonders gleichmäßige Druckeinwirkung entsteht, wenn ein umlaufendes Rippenelement vorgesehen ist. Des Weiteren ist es vorteilhaft, wenn im Bereich des Rippenelementes mindestens eine Austriebsfläche in Form einer Nut oder Sicke vorgesehen ist.

Des Weiteren wird die oben genannte Aufgabe durch ein Verfahren zum Verbinden mittels Laserstrahlen von Werkstückteilen eines derartigen Elektromagnetventils gelöst, bei denen das erste Laserstrahl-transparentes Werkstückteil und das zweite Laserstrahl-absorbierendes Werkstückteil durch eine Fügezone miteinander verbunden werden, derart, dass die Laserstrahlen einer Laserstrahlquelle durch das erste Werkstückteil eingeleitet werden und das zweite Werkstückteil im Bereich der Fügezone erwärmt, so dass das erste Werkstückteil in der Fügezone in einen schmelzflüssigen Zustand gelangen und beim anschließenden Erkalten eine Verfestigung der Fügezone erzielt wird, wobei das zweite Werkstückteil im Ausgangszustand mindestens ein Rippenelement aufweist, derart, dass die zwei Werkstückteile in einem ersten Schritt in eine Presspassung überführt werden, so dass in der Fügezone ein Pressbereich geschaffen wird und in einem zweiten Schritt durch das Verbinden mittels Laserstrahlen die zwei Werkstückteile in der Fügezone kraft- und/oder formschlüssig miteinander verbunden werden.

Hierbei ist es für eine gleichmäßige Druckeinleitung besonders vorteilhaft, wenn das Rippenelement vorgesehen ist, derart, dass Fügezone und Pressbereich übereinstimmen.

Auch ist es vorteilhaft, wenn im Pressbereich mindestens eine Austriebsfläche, beispielsweise in Form einer Nut oder Sicke vorgesehen wird, damit nach dem Verbinden der Pressbereich aufgelöst wird und die inneren Spannungen abgebaut werden.

Ein Ausführungsbeispiel der Erfindung ist in der Zeichnung dargestellt und wird nachfolgend beschrieben.

Hierbei zeigt:
Figur 1 eine Schnittansicht eines Elektromagnetventils
Figur 2 eine schematische Schnittansicht von zwei ineinander geschobenen Werkstückteilen, und
Figur 3 ein schematisch dargestellter Ausschnitt eines erfindungsgemäßen Ausführungsbeispiels von zwei verbundenen Werkstückteilen.

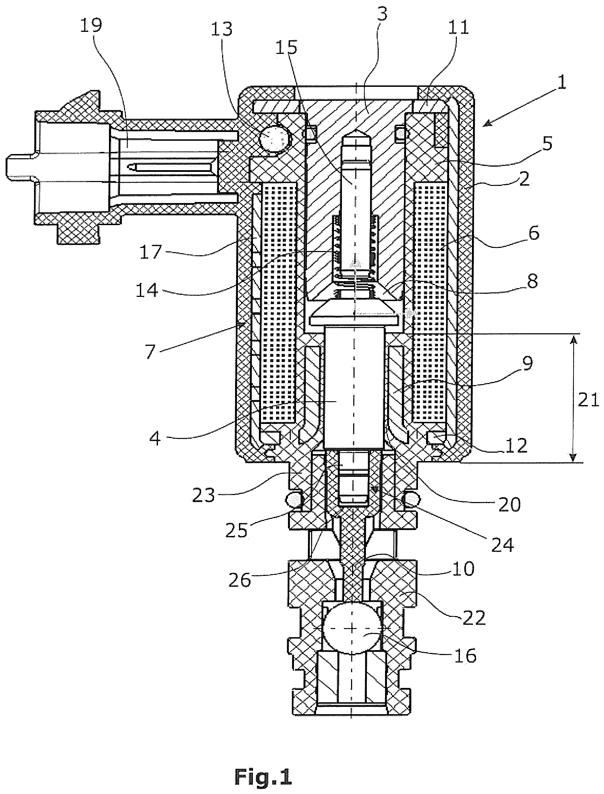

Figur 1 zeigt ein erfindungsgemäßes Elektromagnetventil 1 in einer Schnittansicht, das als Öldruckbegrenzungsventil eingesetzt wird. Dieses Elektromagnetventil 1 besteht aus einem Gehäuse 2, in dem ein Kern 3, ein Ankerteil 4, ein Spulenträger 5, auf den eine Spule 6 gewickelt ist, und eine Rückschlussanordnung 7 angeordnet sind. Das Ankerteil 4 ist im vorliegenden Fall über eine Steckverbindung 24 mit einem Stößelteil 10 verbunden, der auf bekannte Weise auf ein Ventilverschlussglied 16 einwirkt. Dabei läuft das Stößelteil 10 in einer Ventilhülse 22, die als Laserstrahl-absorbierendes Werkstückteil ausgebildet ist und die in einer an dem Kern 3 entgegengesetzten Seite des Spulenträgers 5 ausgebildeten Aufnahmebuchse 23 eingesetzt ist, wobei die Aufnahmebuchse 23 einstückig mit dem Spulenträger 5 verbunden ist und als Laserstrahl-transparentes Werkstückteil ausgebildet ist. Die Ventilhülse 22 und die Aufnahmebuchse 23 sind mittels Laserstrahlschweißen miteinander verbunden.

Ein derartiges, von der Funktionsweise her bekanntes Elektromagnetventil funktioniert wie folgt: Im nicht bestromten Zustand steht zwischen dem Ankerteil 4 und dem Kern 3 ein Spalt 8, in den bei Bestromen der Spule 6 ein magnetisches Feld erzeugt wird, welches eine Axialbewegung des Ankerteils 4 zur Folge hat. Entsprechend wird auch das mit dem Ankerteil 4 verbundene Stößelteil 10 bewegt und das Ventilverschlussglied 16 frei gegeben.

Im vorliegenden Ausführungsbeispiel ist ein Rückschlussinnenabschnitt 9, einteilig mit dem vom Kern 3 abgewandten Rückschlussdeckelabschnitt 12 ausgeführt und im Spulengehäuse 5 integriert angeordnet. Dabei wurden die Rückschlussinnen- und -deckelabschnitte 9, 12 bei der Herstellung des Spulenträgers 5 im Spritzgussverfahren mit eingegossen. Des Weiteren wurde bereits ein Endstörwiderstand 13 im Spulenträger 5 integriert vorgesehen. Auf diese Weise können wesentliche Bauteile während der Vormontage im Spulenträger 5 vorgesehen werden. Bei der Herstellung eines Standardspulenbauteiles muss dann lediglich die für die Ventilfunktion ausgewählte Wicklung 6 ausgewählt werden und auf den Spulenträger 5 aufgebracht werden. Nachdem der zweite Rückschlussdeckelabschnitt 11 angeordnet und der Rückschlussseitenabschnitt 17 derart in eine Pressverbindung mit den Rückschlussdeckelabschnitten 11, 12, gebracht, dass ein elektromagnetischer Kreis herstellbar ist und die Kontaktierung mit einem Elektrostecker 19 vorgenommen wurde, wird das Elektromagnetventil 1 durch Umspritzung mit dem Außengehäuse 2 fertig gestellt. Hierbei wird zwischen dem Außengehäuse 2 und dem Spulenträger 5 eine Kontur vorgesehen, die eine Art labyrinthförmige Abdichtung 27 schafft, um die Dichtwirkung gegenüber der Atmosphäre zu erhöhen.

Im vorliegenden Fall wird das Elektromagnetventil dann durch das Anordnen von Kern 3, Ankerteil 4 und den zugehörigen Bauteilen wie einer Feder 14, die im vorliegenden Fall das Ankerteil 4 unter Vorspannung hält, sowie einem Anschlagstift 15, der einstellbar im Kern 3 angeordnet ist, fertiggestellt. Hierbei ist es für die Positionierung hilfreich, wenn sowohl ein vom Ankerteil 4 entgegengesetzter Bereich des Kernes 3 einen größeren Durchmesser aufweist als ein dem Ventilverschlussglied 16 entgegengesetzter Bereich des Spulenträgers 5.

Im vorliegenden Ausführungsbeispiel werden Lagermittel 20 für das Ankerteil 4 durch den Spulenträger 5 gebildet, wobei der Lagerbereich 21 im Wesentlichen mit dem Bereich übereinstimmt, in dem der Rückschlussinnenabschnitt 9 vorgesehen sind. Diese Ausführungsform wird dadurch ermöglicht, dass ein erstes, zum Kern gerichtetes Teilstück 4a des Ankerteils 4 einen größeren Durchmesser aufweist, als der Innendurchmesser eines Teilbereiches 21 des Spulenträgers 5. Neben des großen Montagevorteils ergibt sich hierdurch der Vorteil, dass der Lagerbereich 21 des Spulenträgers 5 durch das Einbringen des Rückschlussinnenabschnittes 9 zwangsläufig verstärkt ist. Durch das Aufbringen einer Gleitschicht im Lagerbereich 21 ist ein möglichst widerstandsfreies Gleiten des Ankerteils 4 im Spulenträger gewährleistet. Die koaxiale Führung des Ankerteils 4 im Elektromagnetventil ist durch die Doppelfunktion des Spulenkörpers 5, der einerseits den Kern 3 aufnimmt und andererseits als Lagermittel für das Ankerteil 4 fungiert, gewährleistet. Es ist natürlich auch möglich eine nicht weiter dargestellte Lagerbuchse im Bereich 21 vor zu sehen.

Zur Endmontage muss dann lediglich das für die Ventilfunktion ausgewählte Stößelteil 10 auf das Ankerteil 4 aufgesteckt werden, so dass eine Steckverbindung 24 hergestellt ist. Hierzu weist das Ankerteil 4 einen Zapfen 25 auf der in eine Aussparung 26 des Ventilstössels 10 einsteckbar ist und damit kraft- oder formschlüssig mit diesem verbunden ist. Dabei kann der Zapfen 25 noch eine nicht weiter dargestellte Rändelung besitzen durch die die Hubhöhe einstellbar ist. Im vorliegenden Ausführungsbeispiel wird das Stößelteil 10 zusammen mit der Ventilhülse 22 in der Endmontage montiert.

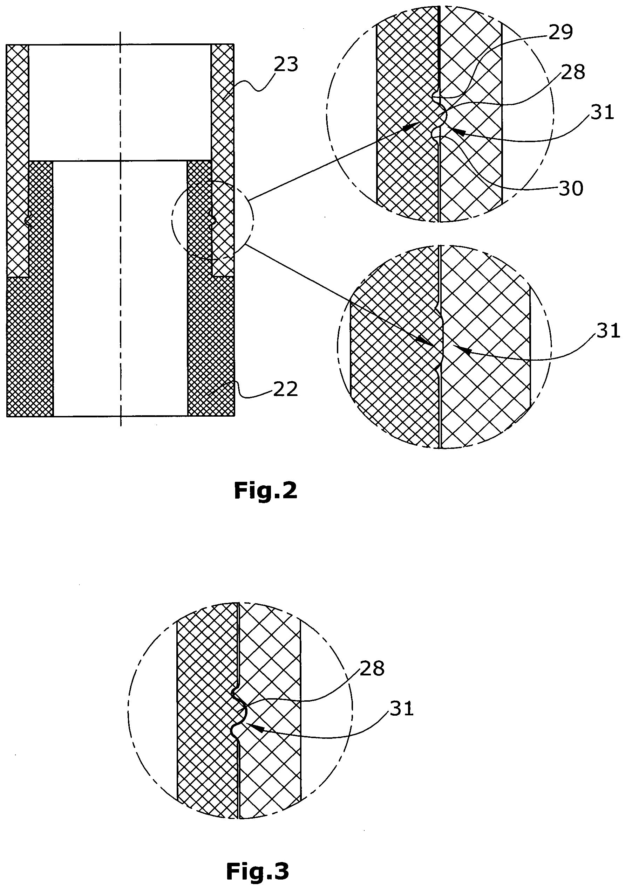

Dadurch, dass in diesem Fall ein Teil des Spulenträgers 5 als Aufnahmebuchse 23 für die Ventilhülse 22 ausgebildet ist, können Koaxialitätsfehler vermindert werden. Wie erfindungsgemäß vorgesehen ist (siehe auch Figur 2) weist die Ventilhülse als zweites Laserstrahl-absorbierendes Werkstückteil ein umlaufendes Rippenelement auf, so dass beim Einstecken in die Aufnahmebuchse 23 eine Presspassung entsteht.

Figur 2 zeigt nun eine schematische Detailansicht der ineinander gesteckten Werkstückteile, in diesem Falle die Ventilhülse 22 und die Aufnahmebuchse 23. Im rechten oberen Ausschnitt ist der Zustand der beiden Werkstückteile vor der Verbindung mittels Laserstrahlschweißen dargestellt. Das Laserstrahl-absorbierende Werkstückteil, die Ventilhülse 22, weist ein umlaufendes Rippenelement 28 auf, an dessen Ober- und Unterseite jeweils eine Nut 29, 30 vorgesehen ist, die während des Schweißvorganges als Austriebsfläche für das Material des Rippenelementes 28 dient. Dadurch, dass das Rippenelement 28 als umlaufendes Rippenelement vorgesehen ist, stimmen die Fügezone 31 während des Laserschweißverfahrens und der Pressbereich überein. Im rechten unteren Ausschnitt der Figur 2 ist eine nicht erfindungsgemäße Situation in der Fügezone 31 nach der Laserschweißbehandlung gezeigt. Deutlich zu erkennen ist, dass sich das Rippenelement 28 weitestgehend aufgelöst hat. Während des Laserstrahlverfahrens durchdringt der Laserstrahl von außen, in diesem Fall das erste Werkstückteil, die Aufnahmebuchse 23 und trifft in der Fügezone 31 auf das Rippenelement 28, das nachfolgend verflüssigt wird und dadurch eine Verbindung der beiden Werkstückteile herstellt, wobei die inneren Spannungen während des Fügevorganges abgebaut und der Werkstoff des verflüssigten Rippenelementes in die dafür vorgesehenen Nuten 29 und 30 ausgetrieben werden.

Es hat sich als vorteilhaft erwiesen, dass das Durchmesserübermaß des Rippenelementes so bemessen ist, dass die inneren Spannungen in beiden Bauteilen die zulässige Höhe nicht überschreiten, das heißt, dass die maximale Dehnbarkeit eingehalten wird.

Erfindundsgemäß wird als Laserstrahl-absorbierenden Werkstoff Metall eingesetzt. Hierbei wird die Erwärmung der Fügezone 31 lediglich zu einem schmelzförmigen Zustand des ersten Werkstückteils in der Fügezone 31 führen. Das Rippenelement 28 des zweiten, Laserstrahl-absorbierenden Werkstückteils wird im Wesentlichen bestehen bleiben, wie in Figur 3 schematisch dargestellt. Nach Erkalten und Verfestigung der Fügezone 31, wird auf diesem Wege eine formschlüssige Verbindung hergestellt.

Darüber hinaus ist es natürlich möglich, dass das Rippenelement andere Formen als die im Ausführungsbeispiel gezeigte Form annimmt. Auch ist es natürlich denkbar, dass Austriebflächen im Laserstrahl-transparenten Werkstückteil vorgesehen sind.

## Patentansprüche

1. Elektromagnetventil mit einem Gehäuse (2), in dem eine auf einen Spulenträger (5) gewickelte Spule (6), ein Ankerteil (4), ein Kern (3) und eine Rückschlussanordnung (7) angeordnet sind, die einen elektromagnetischen Kreis bilden, wobei das bewegliche Ankerteil (4) über Lagermittel in dem Spulenträger (5) gelagert ist und auf ein, in einer Ventilhülse (22) vorgesehenes Ventilverschlussglied (16) einwirkt, wobei der Spulenträger (5) ein erstes Werkstückteil ausbildet, das durch eine Fügezone mit der Ventilhülse (22) verbindbar ist, **dadurch gekennzeichnet, dass** das erste Werkstückteil (23) des Spulenträgers (5) als Laserstrahl-transparentes Werkstückteil aus Kunststoff und die Ventilhülse (22) als Laserstrahl-absorbierendes Werkstückteil aus Metall ausgeführt ist, wobei die Ventilhülse (22) im Bereich der Fügezone (31) mindestens ein Rippenelement (28) aufweist.

2. Elektromagnetventil nach Anspruch 1, **dadurch gekennzeichnet, dass** ein umlaufendes Rippenelement (28) vorgesehen ist.

3. Elektromagnetventil nach Anspruch 1 oder 2, **dadurch gekennzeichnet, dass** im Bereich des Rippenelementes (28) mindestens eine Austriebfläche (29, 30) in Form einer Nut oder Sicke vorgesehen ist.

4. Verfahren zum Verbinden mittels Laserstrahlen von Werkstückteilen eines Elektromagnetventils nach einem der Ansprüche 1 - 3, wobei das erste Laserstrahltransparente Werkstückteil (23) und das zweite Laserstrahl-absorbierende Werkstückteil (22) durch eine Fügezone (31) miteinander verbunden werden, derart, dass die Laserstrahlen einer Laserstrahlquelle durch das erste Werkstückteil (23) eingeleitet werden und das zweite Werkstückteil (22) im Bereich der Fügezone (31) erwärmt, so dass das erste Werkstückteil (23) in der Fügezone (31) in einen schmelzflüssigen Zustand gelangt und beim anschließenden Erkalten eine Verfestigung der Fügezone (31) erzielt wird, wobei das zweite Werkstückteil (22) im Ausgangszustand mindestens ein Rippenelement (28) aufweist, derart, dass die zwei Werkstückteile (22, 23) in einem ersten Schritt in eine Presspassung überführt werden, so dass in der Fügezone (31) ein Pressbereich geschaffen wird und in einem zweiten Schritt durch das Verbinden mittels Laserstrahlen die zwei Werkstückteile (22, 23) in der Fügezone (31) kraft- und/oder formschlüssig miteinander verbunden werden.

5. Verfahren zum Verbinden mittels Laserstrahlen von Werkstückteilen nach Anspruch 4, **dadurch gekennzeichnet, dass** das Rippenelement (28) als umlaufendes Rippenelement vorgesehen ist, derart, dass Fügezone (31) und Pressbereich übereinstimmen.

6. Verfahren zum Verbinden mittels Laserstrahlen von Werkstückteilen nach Anspruch 4 oder 5, **dadurch gekennzeichnet, dass** im Pressbereich mindestens eine Austriebsfläche (29, 30) beispielsweise in Form einer Nut oder Sicke vorgesehen wird, damit nach dem Verbinden der Pressbereich aufgelöst wird und die inneren Spannungen abgebaut werden.

## Claims

1. Solenoid valve with a housing (2) in which a coil (6) wound on a coil carrier (5), an armature element (4), a core (3) and a magnetic reflux arrangement (7) are arranged, which form an electromagnetic circuit, wherein the movable armature element ((4) is supported by bearing means in the coil carrier (5) and acts upon a valve closure member (16) provided in a valve sleeve (22), wherein the coil carrier (5) forms a first workpiece part adapted to be connected with the valve sleeve (22) via a joining zone, **characterized in that** the first workpiece part (23) of the coil carrier (5) is configured as a plastic material workpiece part transparent to laser beams and the valve sleeve (22) is configured as a metal workpiece part absorbing laser beams, wherein the valve sleeve (22) has at least one rib element (28) in the region of the joining zone (31).

2. Solenoid valve of claim 1, **characterized in that** a circumferentially extending rib element (28) is provided.

3. Solenoid valve of claim 1 or 2, **characterized in that**, in the region of the rib element (28), at least one expulsion surface (29, 30) is provided in the form of a groove or a knurling.

4. Method for connecting workpiece parts of a solenoid valve of claims 1 - 3 via a laser beam, wherein the first, laser beam-transparent workpiece part (23) and the second, laser beam-absorbing workpiece part (22) are connected with each other via a joining zone (31) such that the laser beams from a laser beam source are introduced through the first workpiece part (23) and heat the second workpiece part (22) in the region of the joining zone (31) such that the first workpiece part (23) attains a liquid-melted state and a solidification of the joining zone (31) is achieved during the subsequent cooling, wherein, in the initial state, the second workpiece part (22) comprises at least one rib element (28), such that the two workpiece parts (22, 23) are press-fit in a first step so that a press region is created in the joining zone (31) and, in a second step, the two workpiece parts (22, 23) are joined to each other, via connection by laser beam, in a force fitting and/or form fitting manner in the joining zone (31).

5. Method for connecting workpiece parts via a laser beam, as defined in claim 4, **characterized in that** the rib element (28) is provided as a circumferential rib element, such that the joining zone (31) and the press region coincide.

6. Method for connecting workpiece parts via a laser beam, as defined in claim 4 or 5, **characterized in that** at least one expulsion surface (29, 30) is provided in the press region e.g. in the form of a groove or a knurling so that, after connection, the press region is dissolved and inner stresses are reduced.

## Revendications

1. Électrovanne avec un carter (2) dans lequel sont disposés une bobine (6) enroulée sur une porte-bobine (5), un élément armature (4), un noyau (3) et un ensemble de retour de flux (7), qui forment un circuit électromagnétique, ledit élément armature (4) mobil étant supporté dans la porte-bobine (5) et agissant sur un élément de fermeture de vanne (15) prévu dans une douille de vanne (22), la porte-bobine (5) format une première partie de pièce pouvant être joint avec la douille de vanne (22) par une zone de jonction, **caractérisée en ce que** la première partie de pièce (23) de la porte-bobine (5) est réalisée comme partie de pièce en matière plastique, transparente aux rayons laser, et la douille de vanne (22) est réalisée comme partie de pièce en métal, absorbant les rayons laser, la douille de vanne (22) présentant au moins un élément nervure (28) dans la région de la zone de jonction (31).

2. Électrovanne selon la revendication 1, **caractérisée en ce qu'**un élément nervure (28) circonférentiel est prévu.

3. Électrovanne selon la revendication 1 ou 2, **caractérisée en ce que** dans la région dudit élément nervure (28), au moins une surface d'expulsion (29, 30) est prévue en forme d'une rainure ou une moulure.

4. Procédé pour joindre des parties de pièce d'une électrovanne selon l'une quelconque des revendications 1 - 3 par rayons laser, la première partie de pièce (23), transparente aux rayons laser, et la deuxième partie de pièce (22), absorbant les rayons laser, sont jointes l'une à l'autre par une zone de jonction (31) de sorte que les rayons laser d'une source laser sont introduits par la première partie de pièce (23) et chauffent la deuxième partie de pièce (22) dans la région de la zone de jonction (31) de sorte que la première partie de pièce (23) atteint un état en fusion dans la zone de jonction (31) et une solidification de la zone de jonction (31) est obtenue pendant le refroidissement ultérieur, la deuxième partie de pièce (22) ayant, dans l'état initial, au moins un élément nervure (28) de sorte que, dans une première étape, les deux parties de pièce (22, 23) sont mises en ajustage serré de sorte qu'une région de pressage est formée dans la zone de jonction (31) et, dans une deuxième étape, les deux parties de pièce (22, 23) sont jointes dans la zone de jonction (31) en complémentarité de force et/ou de forme par jonction par rayons laser.

5. Procédé pour joindre des parties de pièce par rayons laser selon la revendication 4, **caractérisée en ce que** ledit élément nervure (28) est prévu comme élément nervure circonférentiel, de sorte que la zone de jonction (31) et la région de pressage sont coïncidentes.

6. Procédé pour joindre des parties de pièce par rayons laser selon la revendication 4 ou 5, **caractérisée en ce que** dans la région de pressage, au moins une surface d'expulsion (29, 30) est prévue, par exemple en forme d'une rainure ou moulure, pour qu'après la jonction, la région de pressage soit dissolue et les tensions intérieures soient réduites.
